(19) Europäisches Patentamt
European Patent Office
Office européen des brevets

(11) Veröffentlichungsnummer: **0 303 949**
**A2**

# (12) EUROPÄISCHE PATENTANMELDUNG

(21) Anmeldenummer: **88112960.5**

(51) Int. Cl.⁴: **C08G 69/32 , C08J 5/18**

(22) Anmeldetag: **10.08.88**

(30) Priorität: **14.08.87 DE 3727097**

(43) Veröffentlichungstag der Anmeldung:
**22.02.89 Patentblatt 89/08**

(84) Benannte Vertragsstaaten:
**AT BE CH DE FR GB LI**

(71) Anmelder: **HOECHST AKTIENGESELLSCHAFT**
**Postfach 80 03 20**
**D-6230 Frankfurt am Main 80(DE)**

(72) Erfinder: **Herold, Friedrich, Dr.**
**Thüringer Weg 57**
**D-6238 Hofheim am Taunus(DE)**
Erfinder: **Keil, Günther, Dr.**
**Frankfurter Strasse 60**
**D-6238 Hofheim am Taunus(DE)**
Erfinder: **Bruckner, Werner, Dr.**
**Fuchstanzstrasse 6**
**D-6239 Kriftel(DE)**
Erfinder: **Cardinal, Jutta**
**Königsberger Strasse 31**
**D-6239 Kriftel(DE)**
Erfinder: **Bennett, Cynthia, Dr.**
**Mainstrasse 22**
**D-6200 Wiesbaden(DE)**

## (54) Folien aus aromatischen Copolyamiden, Verfahren zu ihrer Herstellung und ihre Verwendung.

(57) Folie aus aromatischen Copolyamiden des Dicarbonsäure-Diamin-Typs, deren formgebende Substanz aus bestimmten wiederkehrenden Struktureinheiten besteht und die spezifische Kriterien betreffend Staudingerindex, Reißfestigkeit, Volumenwiderstand, elektrischer Durchschlagfestigkeit, Dimensionsstabilität und Wasseraufnahme besitzt, ein Verfahren zu ihrer Herstellung und die Verwendung der Folie zur Herstellung von hitzebeständigem Isolationsmaterial oder als Substrat für flexible Leiterplatten.

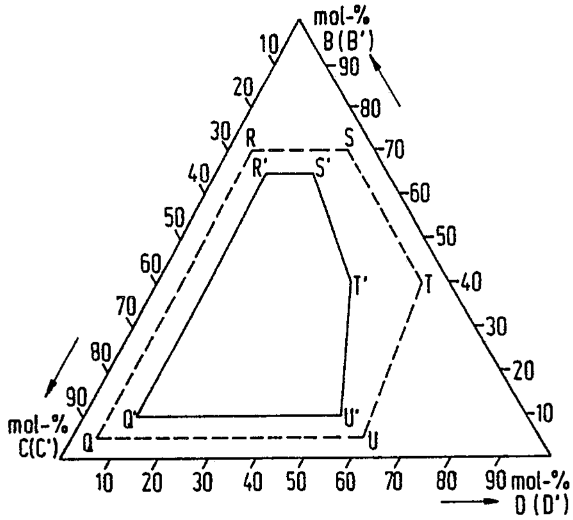


EP 0 303 949 A2

Xerox Copy Centre

## Folien aus aromatischen Copolyamiden, Verfahren zu ihrer Herstellung und ihre Verwendung

Die Erfindung betrifft Folien aus aromatischen Copolyamiden des Dicarbonsäure-Diamin-Typs sowie Verfahren zu ihrer Herstellung. Im speziellen lassen sich nach dieser Erfindung Folien erhalten, die zum einen bereits im unverstreckten Zustand hohe mechanische Eigenschaften besitzen und zum anderen durch Verstreckung bei vergleichsweise niedrigen Temperaturen extrem hohe Werte annehmen und die sich durch niedrige Wasseraufnahme und außergewöhnlich hohe Dimensions-bzw. UV-Stabilität auszeichnen. Zudem erlaubt die Veränderung der Copolymerzusammensetzung das Eigenschaftsbild und die maximal verarbeitbaren Konzentrationen speziell auf die jeweiligen Anwendungsmöglichkeiten anzupassen.

Aromatische Polyamide sind bekannt für ausgezeichnete thermische und mechanische Eigenschaften.

Folien aus überwiegend p-verknüpften Homopolymeren wie Poly-p-phenylenterephthalamid (PPTA) zeigen zwar sehr hohe mechanische Eigenschaften, müssen jedoch aus konzentrierter Schwefelsäure in einem zweistufigen Prozeß mit einem Umlöseschritt verarbeitet werden. Als nachteilig sind daher Probleme mit der Korrosion und die Abfallbeseitigung anzusehen (US-A 3 869 429).

Folien aus besser löslichen, überwiegend m-verknüpften Homopolymeren wie Poly-m-phenylenisophthalamid sind zwar aus organischen Lösungsmitteln verarbeitbar, erreichen jedoch erst nach 2-3 facher Verstreckung hohe mechanische Eigenschaften. Nachteilig bei Folien aus diesen Polymertypen sind auch die unzureichenden elektrischen Eigenschaften (z.B. Durchschlagfestigkeit), schlechtere Dimensionsstabilität beim Erwärmen und eine zu hohe Wasseraufnahme, insbesondere im Hinblick auf die besseren Eigenschaften von Folien aus Polyimiden (EP-B 0 011 785 und EP-A 0 091 788).

Durch Vernetzung und Verstreckung lassen sich Durchschlagfestigkeiten bis 290 kV/mm und ein thermischer Schrumpf von 2,3 % bis 300 °C bei etwas geringeren mechanischen Werten erreichen (EP-B 0 007 114).

Ein Weg zur Verbesserung der Folieneigenschaften bieten Copolymere auf Basis PPTA, wobei die Verarbeitbarkeit in organischen Lösungsmitteln u.a. durch die Einführung flexibler Gruppen erhalten wird (EP-B 0 045 934). Hier werden Copolymere aus 3,4′-Diaminodiphenylether (3,4′-ODA), p-Phenylendiamin (PPD) und 2-Chlor-p-Phenylendiamin mit Terephthalsäuredichlorid (TPC) beschrieben, aus denen sich nach Verstreckung Folien mit hohem Modul herstellen lassen. Nachteilig ist, daß sich 3,4′-ODA nur über ein aufwendiges Verfahren herstellen läßt.

Bekannt sind auch Copolymere aus 3,4′-ODA, PPD und m-Phenylendiamin mit TPC, deren verstreckte Folien vergleichbare Eigenschaften zeigen (DE-C 30 07 063). Nach DE-PS 25 56 883 können aus 3,4′-ODA und PPD mit TPC nach 7,7 facher Verstreckung noch höhere Werte erreicht werden. Nachteilig bei den beiden Veröffentlichungen sind aber einmal die hohen notwendigen Verstreckverhältnisse, z.B. bei der Herstellung biaxial verstreckter Folien, die sehr kleine Reißdehnung und die im Vergleich zum Modul relativ geringe Reißfestigkeit, zum anderen können die zur Herstellung benötigten Amine nur in sehr aufwendigen Verfahren hergestellt und gereinigt werden.

Es bestand daher das Bedürfnis, verbesserte Folien aus einem aromatischen Copolyamid zu erhalten und das Verfahren zu ihrer Herstellung aus einem organischen Lösungsmittel möglichst einfach durchzüführen. Ein wichtiges Ziel der Erfindung ist, daß schon die unverstreckten, isotropen Folien hohe mechanische bzw. gute elektrische Eigenschaften bei relativ geringer Wasseraufnahme zeigen. Weitere Ziele sind eine größere UV-Stabilität und höhere Dimensionsstabilität beim Erwärmen als bekannte Folien, beispielsweise von Polyimidfolien, z.B. Kapton H® von DuPont, die hinsichtlich ihrer Eigenschaften führend am Markt ist. Bezüglich Verstreckung sollten die Folien zum einen bei relativ niedrigen Temperaturen verstreckbar sein und zum anderen bereits mit kleinen Verstreckverhältnissen schon außergewöhnlich hohe mechanische Eigenschaften erreichen. Zudem wird angestrebt, daß Eigenschaften und maximal verarbeitbare Konzentration durch die Copolymerzusammensetzung weitgehend variierbar und damit speziell auf die jeweiligen Anwendungsmöglichkeiten angepaßt werden können.

Die Zusammensetzung solcher aromatischen Copolyamide, die nunmehr in Form von Folien die angeführten Bedingungen erfüllen, ist in der EP-A-O 199 090 beschrieben. Ein praktisches Beispiel aber, wie man derartige Folien erhält und deren überraschende Eigenschaften war dieser Veröffentlichung nicht zu entnehmen.

Die Erfindung löst die Aufgabe, wie sie in den Patentansprüchen gekennzeichnet ist.

Die Copolyamide bestehend aus den folgenden wiederkehrenden Struktureinheiten:

A -CO-Ar-CO-

B -NH-Ar'-NH-

C 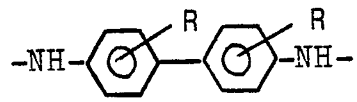

D 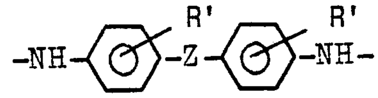

wobei

- -Ar- und -Ar′-zweiwertige aromatische Reste sind, bei denen die Bindungen in p- oder vergleichbarer koaxialer oder paralleler Stellung stehen und die mit einem oder zwei Alkyl- oder Alkoxyresten mit bis zu 4 C-Atomen im Alkylrest, auch verzweigt, oder Halogenresten, vorzugsweise Chlor, substituiert sein können
- R und R′ unabhängig voneinander jeweils entweder Wasserstoff oder bis zu zwei Alkyl- oder Alkoxyreste mit bis zu 4 C-Atomen im Alkylrest, auch verzweigt, oder Halogenreste sind und
- Z eine Gruppierung -O-Ar-O- darstellt, wobei -Ar- den gleichen Aufbau wie oben angegeben aufweist.

Die Mengen der eingesetzten Diamine sind nicht beliebig wählbar, sondern nur innerhalb bestimmter Molprozentbereiche, bezogen auf die gesamte Molmenge der Diaminkomponenten. Der Konzentrationsbereich wird definiert durch die Eckpunkte Q, R, S, T und U, besonders bevorzugt ist der Bereich mit den Eckpunkten Q′, R′, S′, T′ und U′, vgl. Figur.

Der Staudingerindex [$\eta$] der formbildenden Copolyamide liegt im Bereich von 50 bis 1200 $cm^3/g$, bevorzugt von 200 bis 900 $cm^3/g$, gemessen in 96 %iger $H_2SO_4$ bei 25 °C.

Die Herstellung der Folien erfolgt aus Lösungen dieser Copolymeren in organischen Amidlösungsmitteln, gegebenenfalls unter Zusatz von Lösevermittlern. Nach der Formung der Folien folgen Koagulation, Trocknung und gegebenenfalls Temperung.

Erfindungsgemäß besitzen die unverstreckten Folien bereits Reißfestigkeiten von mindestens 100, bevorzugt mindestens 200 MPa und Moduli von mindestens 3, bevorzugt mindestens 3,8 GPa.

Durch Veränderung der Copolymerzusammensetzung, insbesondere der Komponente D, lassen sich die Eigenschaften weitgehend variieren. So nimmt z.B. mit steigendem Anteil an D, wobei B und C im Bereich zwischen 9:1 und 1:9 variiert werden können, der Modul nahezu linear ab: 10 mol-% D: 6,2 GPa, 12,5 mol-% D: 5,9 GPa, 25 mol-% D: 5 GPa, 37,5 mol-% D: 4 GPa und 50 mol-% D: 3,5 GPa. Mit dem Verlust an Modul bei steigendem Anteil an D nimmt die maximal verarbeitbare Konzentration aber zu, d.h. die Herstellungskosten werden gesenkt. Dabei bleibt die Reißfestigkeit bis 40 mol-% der Komponente D von mindestens 200 MPa erhalten.

Bezüglich der elektrischen Eigenschaften zeigen die erfindungsgemäßen Folien einen Volumenwiderstand von mindestens $10^{15}$ $\Omega\bullet$cm und eine Durchschlagfestigkeit von mindestens 150 kV/mm, vorzugsweise mindestens 200 kV/mm und insbesonders von mindestens 200 kV/mm.

Restreißfestigkeiten von mindestens 50 % nach 500 Stunden und mindestens 25 % nach 1000 Stunden bei der künstlichen Belichtung im Xeno-Test verdeutlichen die gute UV-Stabilität; bezüglich Dimensionsstabilität beträgt die Längenänderung getemperter Folien bis 400 °C höchstens 2 %, bevorzugt höchstens 1,3 %.

Zur Verstreckung eignen sich Kontaktverstreckung bei Temperaturen von 200 bis 500 °C, bevorzugt von 250 bis 400 °C und besonders bevorzugt von 280 bis 350 °C, ferner Naßverstreckverfahren im gequollenen Zustand oder Kombinationen beider Methoden. Durch Verstreckung erhöhen sich die Ausgangsreißfestigkeiten $T_A$ erfindungsgemäß zu extrem hohen Werten, bei der uniaxialen Verstreckung z.B. im einzelnen gemäß Gleichung (1) entsprechend der Untergrenze $T_u$, bzw. Gleichung (2), entsprechend der Obergrenze $T_o$ der erreichbaren Reißfestigkeiten

$$T_u = (K_1 \bullet VV) + T_A \quad (1)$$
$$T_o = (K_2 \bullet VV) + T_A \quad (2)$$

wobei T in MPa und VV als Verstreckverhältnis in Vielfachen der Ausgangslänge angegeben werden. Beispielsweise entspricht eine Verstreckung um 200 % dem 2-fachen, d.h. der Wert für VV ist 2.

$K_1$ und $K_2$ nehmen dabei Werte von 250 bzw. 850, besonders bevorzugt 350 bzw. 850 an. Entsprechend geben Gleichungen (3) und (4) die Untergrenze $M_u$ bzw. die Obergrenze $M_o$ der durch Verstreckung

erreichbaren Moduli M an, ausgehend vom Ausgangswert $M_A$.

$M_u = (K_3 \bullet VV) + M_A$ (3)
$M_o = (K_4 \bullet VV) + M_A$ (4)

wobei M in GPa und VV wie oben beschrieben angegeben werden.

$K_3$ und $K_4$ nehmen dabei Werte von 3 bzw. 15, besonders bevorzugt 4 bzw. 15 an. Die Wertepaare von Reißfestigkeit und Reißdehnung bei verstreckten Folien liegen innerhalb des Bereiches, dessen Grenzen durch Gleichung (5), entsprechend der Untergrenze und Gleichung (6), entsprechend der Obergrenze gegeben sind.

$T_{min} = 1288 - (52{,}77 \bullet E) + (0{,}4189 \bullet E^2)$ (5)
$T_{max} = 2898 - (126{,}8 \bullet E) + (1{,}018 \bullet E^2)$ (6)

wobei T im MPa, die Reißdehnung E in % angegeben werden und die Gleichungen (5) und (6) nur für $5 < E < 20$ gültig sind.

Beispielsweise zeigen 2 fach verstreckte Folien bei 25 mol-% D als mittlere mechanische Eigenschaften: T/E/M/ = 1500 MPa /9%/25 GPa.

Die Wasseraufnahme der erfindungsgemäßen Folien ist im Vergleich zu anderen Polyaramiden gering und beträgt im unverstreckten Zustand höchstens 3 Gew.-% bei 23°C und 50 % rel. Feuchte. Durch Verstrecken verringert sich dieser Wert, beispielsweise bei einem Verstreckverhältnis von 2,5 fach, auf höchstens 2 %.

Zur Herstellung der erfindungsgemäß benötigten Copolyamide mit den wiederkehrenden Struktureinheiten A bis D sind die folgenden Verbindungen geeignet:

Als Dicarbonsäurederivate der Formel

A′ Cl-CO-Ar-CO-Cl

sind beispielsweise geeignet:
4,4′-Diphenylsulfondicarbonsäuredichlorid,
4,4′-Diphenyletherdicarbonsäuredichlorid,
4,4′-Diphenyldicarbonsäuredichlorid,
2,6-Naphthalindicarbonsäuredichlorid, ganz besonders aber Terephthalsäuredichlorid und substituierte Terephthalsäuredichloride wie z.B. 2-Chlor-Terephthalsäuredichlorid.

Als aromatische Diamine der Struktur

B′ $H_2N\text{-}Ar'\text{-}NH_2$

eignen sich insbesondere p-Phenylendiamin bzw. substituierte Phenylendiamine wie z.B. 2-Chlor-, 2,5-Di-Chlor- oder 2-Methoxy-p-Phenylendiamin.

Als Benzidinderivate der Formel

C′ 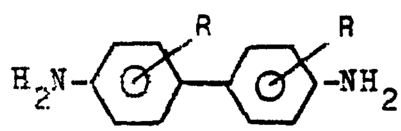

eignen sich besonders 3,3′-Dimethoxy-, 3,3′-Di-Chlor-, 2,2′-Dimethyl- und ganz besonders 3,3′-Dimethylbenzidin.

Diaminkomponenten der Formel

D′ 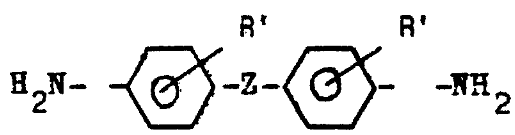

sind insbesondere 1,4-Bis-(4′-aminophenoxy)benzol und entsprechend dem Anspruch substituierte Derivate.

Erfindungsgemäß sind drei Diaminkomponenten zur Ausbildung des Copolyamids notwendig, wobei die Mengen der eingesetzten Diamine nicht beliebig wählbar sind, sondern nur innerhalb bestimmter Molprozentbereiche, bezogen auf die gesamte Molmenge an Diaminkomponenten.

Der erfindungsgemäß erforderliche Zusammensetzungsbereich der Copolymeren ist durch die folgenden Eckpunkte definiert; die Abgrenzung des Bereiches ist auch grafisch in der Figur 1 im Dreieckskoordinatensystem dargestellt. Die Eckpunkte des beanspruchten Bereiches weisen die in Tabelle 1 gezeigten Zuordnungen auf.

Tab. 1

| Punkt | mol-% an | | | Punkt | mol-% an | | |
|---|---|---|---|---|---|---|---|
| | B | C | D | | B | C | D |
| Q | 5 | 90 | 5 | Q′ | 10 | 80 | 10 |
| R | 70 | 25 | 5 | R′ | 65 | 25 | 10 |
| S | 70 | 5 | 25 | S′ | 65 | 15 | 20 |
| T | 40 | 5 | 55 | T′ | 40 | 20 | 40 |
| U | 5 | 35 | 60 | U′ | 10 | 37,5 | 52,5 |
| Definition der Eckpunkte der Bereiche (vgl. Figur) | | | | | | | |

Der Konzentrationsbereich wird durch die Eckpunkte Q, R, S, T und U definiert, bevorzugt gilt der Bereich mit den Eckpunkten Q′, R′, S′, T′ und U′. Die ausgezeichneten Eigenschaften der erfindungsgemäß geformten Folien beruhen auf dem Einbau der Aminbausteine B′, C′ und D′ in den angegebenen Grenzen.

Die Lösungskondensation der aromatischen Dicarbonsäuredichloride mit den Mischungen aus aromatischen Diaminen erfolgt in aprotischen, polaren Lösungsmitteln vom Amidtyp wie N,N-Dimethylacetamid oder insbesondere N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und/oder zweiten Gruppe des periodischen Systems zugegeben werden. Bevorzugte Zusätze sind Calciumchlorid und/oder Lithiumchlorid. Üblicherweise wird die Menge an Dicarbonsäuredichlorid so gewählt, daß die Lösungsviskosität maximal wird, d.h. je nach Monomerreinheit werden geringfügig mehr oder weniger als 100 mol-% zugesetzt.

Die Polykondensationstemperaturen liegen üblicherweise zwischen -20 und +120 °C, bevorzugt zwischen +10 und +100 °C. Besonders gute Ergebnisse werden bei Reaktionstemperaturen zwischen +10 und +80 °C erzielt. Die Polykondensationsreaktionen werden vorzugsweise so ausgeführt, daß nach Abschluß der Reaktion 2 bis 15, vorzugsweise 3,5 bis 10 Gew.-% an Polykondensat in der Lösung vorliegen. Steigender Anteil der Komponente D′ ermöglicht die Verarbeitung höherer Konzentrationen, während bei kleinen Anteilen an D′ die Polymerkonzentration in der Lösung deutlich herabgesetzt werden muß. Eine obere Grenze für den Anteil an D′ ergibt sich ab ca. 60 mol-%, da hier die erfindungsgemäßen Eigenschaften nicht mehr erreichbar sind, eine untere Grenze ergibt sich bei einem Wert von höchstens 5 Mol-%, da sich dann eine mangelnde Löslichkeit der Polymeren zeigt. Für spezielle Anwendungen kann die Lösung bei Bedarf mit N-Methyl-2-Pyrrolidon oder anderen Amidlösungsmitteln verdünnt werden.

Die Polykondensation kann in üblicher Weise z.B. durch Zugabe von monofunktionellen Verbindungen wie Benzoylchlorid gestoppt werden, ebensogut ist die Verwendung monofunktioneller Amine zur Begrenzung der Molmasse geeignet.

Nach Beendigung der Polykondensation, d.h. wenn die Polymerlösung die zur Weiterverarbeitung erforderliche Viskosität ereicht hat, wird der entstandene und locker an das Amidlösungsmittel gebundene Chlorwasserstoff durch Zugabe basischer Substanzen neutralisiert. Geeignet sind dafür beispielsweise Lithiumhydroxid, Calciumhydroxid, insbesondere aber Calciumoxid. Zur Herstellung von geformten Gebilden gemäß der vorliegenden Erfindung werden die oben beschriebenen Polyamidlösungen filtriert, entgast und in bekannter Weise zu Folien weiterverarbeitet.

Den Lösungen können auch geeignete Mengen an üblichen Additiven zugesetzt werden. Beispiele sind Lichtstabilisatoren, Antioxidationsmittel, Antistatika, Farbstoffe, Farbpigmente oder Füllstoffe.

Zur Formung der Folien dienen bekannte Verfahren wie Gieß-, oder Extrudierverfahren: Beim Gießverfahren wird die filtrierte und entgaste Lösung in dünnen Schichten auf Trägermaterialien aufgebracht. Geeignete Trägermaterialien sind inerte Polymerfolien, z.B. aus Polyester oder Metallbänder im Labormaßstab nach Glasplatten. Bevorzugt ist eine Verarbeitung der Lösungen bei Temperaturen von mindestens ca. 10 °C unterhalb des Siedepunktes des verwendeten Lösungsmittels, besonders bevorzugt bei mindestens

ca. 30 °C unterhalb des Siedepunktes. Bei zu hohen Temperaturen besteht die Gefahr, daß eine Depolymerisation eintritt, während bei zu niedrigen Temperaturen die Verarbeitung wegen der hohen Viskositäten erschwert wird. Günstig, aber nicht notwendig ist eine Vortrocknung der gegossenen Folien, im allgemeinen bis zu einem Rest-Lösungsmittelgehalt der Folie zwischen 5 und 90 %. Geeignete Bedingungen sind Temperaturen zwischen Raumtemperatur und ca. 10 °C unterhalb des Siedepunktes des verwendeten Lösungsmittels, auch verbunden mit starker Konvektion wie sie beispielsweise in Umluftschränken herrscht. Je nach Temperatur und Konvektion genügen Zeiten zwischen einigen Minuten bis zu Tagen, bevorzugt 2 bis 30 Minuten. Die Folien lassen sich vom Trägermaterial sofort, bei oder direkt nach der Koagulation ablösen. Alternativ zum Gießverfahren können die filtrierten und entgasten Lösungen auch direkt durch entsprechende Düsen koaguliert werden. Dabei sind Naß- oder Trockennaßverfahren anwendbar, bei ersterem wird direkt koaguliert, bei letzterem durchläuft die vorgeformte Folie zunächst eine Zone mit einem nicht-koagulierenden Medium, z.B. Luft. Diese Zone kann zwischen 5 und 400 mm, bevorzugt zwischen 10 und 100 mm betragen.

Als Koagulationsbad können Wasser, organische Lösungsmittel oder Mischungen daraus verwendet werden, jeweils bei Bedarf auch mit Salzzusätzen. Als Salzzusatz eignen sich z.B. die oben aufgeführten Halogenidsalze der ersten und zweiten Gruppe des periodischen Systems. Bevorzugt gilt das Salz, welches auch als Lösungsvermittler zur Herstellung der Kondensationslösung benutzt wird, besonders bevorzugt ist $CaCl_2$, wobei die Konzentration in weiten Bereichen variiert werden kann. Die Temperatur sollte ca. 10 °C kleiner als der Siedepunkt des Koagulationsbades sein, bevorzugt zwischen Raumtemperatur und 90 °C>

Die koagulierten Folien werden anschließend gewässert, z.B. können sie über Rollen durch mehrere aufeinander folgende Waschbäder geführt werden. Möglichst vollständiges Auswaschen des Salzes ist die Voraussetzung zum Erreichen der gewünschten elektrischen Eigenschaften. Bevorzugt sind hierfür wäßrige Bäder, deren Temperaturen im allgemeinen zwischen Raumtemperatur und 90 °C, bevorzugt bis 70 °C liegen sollen. Je nach Zahl der Bäder und Umwälzung des Mediums (Gegenströmung), kann der Waschprozeß von 5 Minuten bis zu mehreren Tagen dauern, bevorzugt sind 5 - 30 Minuten.

Die Trocknung erfolgt bevorzugt über Rollen oder durch IR-Strahler bei Temperaturen zwischen 100 und 500 °C. Günstig aber nicht notwendig ist hierbei das Arbeiten mit Temperaturgradienten und/oder unter Stickstoff. Besonders günstig zur Verarbeitung sind Endtemperaturen von 300-400 °C, die kurze Zeiten erlauben und durch die sich ein gesonderter Temperschritt erübrigt.

Vorzugsweise findet zum Erreichen der erfindungegemäß ausgezeichneten Dimensionsstabilität bis zu 400 °C ein Temperschritt bei Temperaturen zwischen 200 und 500 °C, bevorzugt 300-400 °C statt. Günstig ist es, die Folien unter Belastung zu tempern, ebenfalls kann unter einer Stickstoff-Atmosphäre gearbeitet werden. Die Belastungskraft darf dabei maximal die Reißfestigkeit der Folien bei der jeweiligen Temperatur erreichen, bevorzugt sollte die Folie mit nicht mehr als 10 % dieses Grenzwertes belastet werden. Bei der Herstellung verstreckter Folien erübrigt sich ebenfalls ein gesonderter Temperschritt.

Zum uniaxialen oder biaxialen Verstrecken, letzteres entweder nacheinander oder simultan, können bekannte Methoden angewandt werden: Neben Verstreckung trockener Folien über heiße Flächen, unter IR-Strahlern oder sonstigen Wärmequellen besteht auch die Möglichkeit, Folien mit einem Restgehalt an Lösungsmittel und/oder Salz, auch in Lösungsmittelbädern, naß zu verstrecken. Bei der Verstreckung trockener Folien liegt ein Vorteil darin, daß schon bei den relativ niedrigen, minimal notwendigen Temperaturen von 200, vorzugsweise 250 °C hohe spezifische Werte bezüglich der Eigenschaften erhalten werden. Auch hier kann unter Stickstoff-Atmosphäre verstreckt werden. Auch Kombinationen aus Naß- und Trockenverstreckung sind möglich. Die Verstreckverhältnisse liegen im Bereich 1,5 bis 20 fach, bevorzugt bei 2 - 10 fach (uniaxial). Erfindungsgemäß genügen schon niedrige Verstreckverhältnisse zum Erreichen außergewöhnlich hoher mechanischer Eigenschaften.

Die erfindungsgemäßen Folien finden industrielle Verwendung beispielsweise als hitzebeständiges Isolationsmaterial und als Substrat für flexible Leiterplatten z.B. im Bereich der Datenverarbeitung. Insbesondere sind solche Einsatzgebiete geeignet, die eine Kombination von guten mechanischen Eigenschaften, Temperaturstabilität und Dimensionsstabilität fordern, die erfindungsgemäß hier bereits unverstreckt und damit isotrop erreicht werden.

Die angegebenen Eigenschaftswerte wurden nach folgenden Test-Methoden ermittelt:

**Staudingerindex [$\eta$]:**

Der Staudingerindex [$\eta$] ist nach Gleichung (7) definiert:

$$[\eta] = \lim_{c_2 \to 0} \frac{(\eta / \eta_1) - 1}{c_2} \qquad (7)$$

wobei $\eta$ und $\eta_1$ die Viskositäten der Lösung bzw. des Lösungsmittels und $c_2$ die Konzentration des Polymers bedeuten.

**Viskosität $\eta$:**

die Viskosität $\eta$ wurde mit einem Rotationsviskosimeter (Typ RV 100, Fa. Haake, Karlsruhe), bestimmt, angegeben ist der auf Schergefälle Null extrapolierte Wert der Kondensationslösung bei 90°C.

**Mechanische Eigenschaften der Folien:**

Zur Messung diente ein Instron Zug-Dehnungs-Gerät (Testbedingungen: Streifenbreite 15 mm, Einspannlänge 50 mm und Messgeschwindigkeit 20 mm/min). Reißfestigkeit, Reißdehnung, Anfangsmodul (bis 0,5 % Dehnung) (alle nach DIN 53455 Probekörper 5)) und Weiterreißfestigkeit (nach DIN 53 859 (Teil 2)) wurden bei 23°C und 50 % relativer Luftfeuchte bestimmt, jeweils als Mittelwert von mehreren Messungen.

**Dimensionsstabilität:**

Zur Messung der Dimensionsstabilität diente ein TA-3000-System mit Meßkopf TMA-40 (Fa. Mettler Greifensee, Schweiz), mit dem die Längenänderung einer Folienprobe bei Erwärmen unter Stickstoff bestimmt wird. Dabei muß wegen der hohen Dimensionsstabilität der untersuchten hochtemperaturstabilen Folien bis über 400°C die Ausdehnung der Klemmen berücksichtigt werden.

**Elektrische Messungen:**

Alle Werte wurden bei 23°C und 50 % relativer Luftfeuchte bestimmt, jeweils mit vier bis sechs Einzelmessungen. Im einzelnen galten folgende Bedingungen:

Dielektrizitätszahl, Verlustfaktor:

nach DIN 53 483 mit aufgedampften Al-Elektroden (4,5 $cm^2$) bei 1 kHz

Widerstand:

nach DIN 53 482

Durchschlagfestigkeit:

nach DIN 53 481 bei 50 Hz

**Xeno-Test (DIN 51 187 /Zyklus B):**

Die UV-Stabilität wurde durch Messungen mit einem Xenotestgerät 450 unter Bewitterung im Wendelauf (17 Minuten Trocken, 3 Minuten Regen) bei einer Schwarztafeltemperatur von 45 °C und einer relativen Luftfeuchte von 80 % bestimmt.

**Thermische Messungen:**

Die thermischen Daten wie Schmelz-und Zersetzungspunkt werden nach den Methoden der Thermogravimetrie (TGA: $N_2$, 3 K/min) und der Differentialthermoanalyse (DSC: $N_2$, 10 K/min) ermittelt.

In den nachfolgenden Beispielen bedeutet % Gewichtsprozent, sofern nicht anders angegeben und mit Ausnahme der Angaben über Reißdehnung, Längenänderung, Restreißfestigkeit und Restanfangsmodul.

**Beispiele**

Die Anteile an Dicarbonsäure- und Diaminkomponenten wurden keweils zu 100 mol-% berechnet, es gelten folgende Abkürzungen:

BAPOB 1,4-Bis-(4′-aminophenoxy)benzol
Cl-PPD 2,5-Di-Chlor-p-phenylendiamin
DAPM 4,4′-Di-aminodiphenylmethan
2-DMB 2,2′-Di-methyl-benzidin
3-DMB 3,3′-Di-methyl-benzidin
DMOB 3,3′-Di-methoxy-benzidin
NMP N-Methyl-2-pyrrolidon
PPD p-Phenylendiamin
TMB 3,5,3′,5′-Tetra-methyl-benzidin
TPC Terephthalsäuredichlorid

1) Folien aus aromatischem Copolyamid, bestehend aus 100 mol-% TPC, 25 mol-% BAPOB, 25 mol-% PPD und 50 mol-% 3-DMB.

10,82 g PPD, 42,46 g 3-DMB und 29,24 g BAPOB wurden unter Stickstoff-Atmosphäre in 2503 g NMP gelöst und zwischen 15 und 70 °C innerhalb von 60 Minuten 81,21 g TPC zugegeben. Die viskose und klare Lösung wurde noch ca. 40 Minuten lang bei 70 °C nachgerührt und dann mit 24,54 g CaO (96 %ig), d.h. im 5 %igen Uberschuß, neutralisiert und weitere 30 Minuten bei 70 °C nach gerührt.

Die Lösung enthielt 5,0 % Copolyamid und 1,7 % $CaCl_2$; das gelöste Polyamid zeigt einen Staudingerindex von 500 $cm^3/g$ und eine Viskosität von 111 Pa.s bei 90 °C.

Die Lösung wurde filtriert, entgast und zu Folien gegossen, wobei sie mit einer Rakel bei 90 °C auf Glasplatten ausgezogen wurde. Die gegossenen Folien wurden anschließend 48 Stunden bei 90 °C vorgetrocknet, dann in Wasser bei 25 °C koaguliert, anschließend für 20 Minuten in fließendem Wasser und für 24 Stunden in entsalztem Wasser gewässert und danach bei 110 °C und 50 mbar unter leichter Stickstoff-Überleitung für 48 Stunden getrocknet.

Die Dicke der Folien konnte je nach der aufgerakelten Schichtdicke der Lösung, zwischen 2 und 100 µm eingestellt werden.

Die mechanischen Eigenschaften einer unverstreckten 25 µm Folie betrugen: 230 MPa Reißfestigkeit, 80 % Reißdehnung, 5,0 GPa Anfangsmodul und Weiterreißfestigkeit von 13 g. Bei 200 °C beträgt die Reißfestigkeit noch 95 MPa, die Reißdehnung 115 %.

Die elektrischen Eigenschaften der Folien bei 23 °C und 50 % relativer Luftfeuchte ergeben folgende Werte:

Durchschlagfestigkeit 240 kV/mm, Dielektrizitätszahl 4,6, Verlustfaktor 2,5 . $10^{-2}$, Volumenwiderstand $10^{16}$ Ω•cm und Oberflächenwiderstand $10^{14}$ Ω. Die Wasseraufnahme beträgt 2,5 %.

Die Untersuchung der thermischen Eigenschaften der Folien zeigt einen Schmelzpeak ab 440 °C, der unmittelbar in die Zersetzung ab 460 °C übergeht. Bezüglich der Dimensionsstabilität zeigt sich bis 200 °C

eine Längenänderung von kleiner als 0.8 %.

2) Die aus einem aromatischen Copolyamid entsprechend Beispiel 1 erhaltenen Folien wurden bei 350 °C unter einer Belastung von 0,5 MPa getempert.

Die erhaltenen Folien zeigen deutlich verbesserte Dimensionsstabilität bei Temperaturen über 250 °C, bis 400 °C bleibt die Längenänderung bei Werten kleiner als 1,1 %.

3) Die aus einem aromatischen Copolyamid entsprechend Beispiel 1 erhaltenen Folien wurden nachträglich bei 280 °C in einem Instron Zug-Dehnungs-Gerät mit Wärmekammer um das 1,5 fache verstreckt.

Die mechanischen Eigenschaften erhöhen sich auf 800 MPa Reißfestigkeit, 19 GPa Anfangsmodul und 12 % Reißdehnung.

4) Die aus einem aromatischen Copolyamid entsprechend Beispiel 1 erhaltenen Folien wurden nachträglich bei 280 °C in einem Instron Zug-Dehnungs-Gerät mit Wärmekammer um das 2,5 fache verstreckt.

Die mechanischen Eigenschaften erhöhen sich auf 1500 MPa Reißfestigkeit, 25 GPa Anfangsmodul und 9 % Reißdehnung.

Die Wasseraufnahme der so verstreckten Folien beträgt 1,8 % bei 23 °C und 50 % relativer Luftfeuchte.

5) Die Lichtstabilität von Folien aus einem aromatischen Copolyamid entsprechend Beispiel 1 wurde im Xeno-Test untersucht.

Ausgehend von mechanischen Eigenschaften der Folien entsprechend 224 MPa Reißfestigkeit, 71 % Reißdehnung und 4,6 GPa Anfangsmodul betrugen nach 500 Stunden die Reißfestigkeit 71 %, der Restanfangsmodul 111 % und die Restreißdehnung 39 % bzw. nach 1000 Stunden die Restreißfestigkeit 31 %, der Restanfangsmodul 72 % und die Reißdehnung 2 %.

**Vergleichsbeispiel V 1:**

Zum Vergleich wurde eine Polyimidfolie aus Pyromellithsäuredianhydrid und 4,4′-Diaminodiphenylether von 25 µm Stärke untersucht, die von der Fa. DuPont (USA) als Kapton H ® kommerziell angeboten wird und die besten Eigenschaftswerte gemäß dem Stand der Technik aufweist.

Ausgehend von mechanischen Eigenschaften der Folien entsprechend 177 MPa Reißfestigkeit, 30 % Reißdehnung und 3,0 GPa Anfangsmodul betrugen nach 500 Stunden die Restreißfestigkeit 22 %, der Restanfangsmodul 93 % und die Reißdehnung 2 %, nach 1000 Stunden war die Folie bereits zerstört. Messungen zur Dimensionsstabilität ergaben bis 200 °C eine Längenänderung kleiner als 1,4 % und bis 400 °C eine Längenänderung kleiner als 1,8 %.

Der Wert für die Weiterreißfestigkeit betrug 5 g.

**6 - 18 und Vergleichsbeispiele V2 - V4:**

Die Beispiele 6 bis 18 zeigen die erfindungsgemäße Möglichkeit einer weitgehenden Variation der mechanischen Eigenschaften und der maximal verarbeitbaren Konzentration über die Veränderung der Zusammensetzung der Copolymeren. Zusätzlich sind die Vergleichsbeispiele V2 bis V4, durch das Präfix V gekennzeichnet, aufgeführt, die Versuche mit von der Erfindung abweichenden Diaminen oder Versuche außerhalb des beanspruchten Bereichs beschreiben.

Die Herstellung der Folien erfolgte in allen Fällen analog zu Beispiel 1: die entsprechenden Daten fassen die Tabellen 1 und 2 zusammen, in denen die Zusammensetzung der Copolymeren, die Konzentrationen an Polymer und $CaCl_2$, der Staudingerindex [$\eta$], die Viskosität $\eta$ bei 90 °C und die Folieneigenschaften an 25 µm Folien angegeben sind. Gegebenfalls wurde noch LiCl zugesetzt, um eine homogene Lösung zu erhalten.

**19 und 20:**

Folien aus aromatischem Copolyamid, bestehend aus 100 mol-% TPC, 12,5 mol-% BAPOB, 37,5 mol-% PPD und 50 mol-% 3-DMB.

14,60 g PPD, 38,21 g 3-DMB und 12,16 g BAPOB wurden wie in Beispiel 1 kondensiert und neutralisiert, jedoch bei Beispiel 20 vor Erreichen der maximalen Viskosität mit 1,7 g Benzoylchlorid abgestoppt.

TABELLE 1

| Beispiel | A | | | B | | | C | | | D | | |
|---|---|---|---|---|---|---|---|---|---|---|---|---|
| Nr. | Bez. | mol-% | g | Bez. | mol-% | g | Bez. | mol-% | g | Bez. | mol-% | g |
| 6 | TPC | 100 | 60,91 | PPD | 10 | 3,24 | 3-DMB | 80 | 50,95 | BAPOB | 10 | 8,77 |
| 7 | TPC | 100 | 52,63 | PPD | 37,5 | 10,51 | 3-DMB | 50 | 27,51 | BAPOB | 12,5 | 9,47 |
| 8 | TPC | 100 | 81,21 | PPD | 17,5 | 7,57 | 3-DMB | 60 | 59,95 | BAPOB | 22,5 | 26,31 |
| 9 | TPC | 100 | 60,91 | PPD | 40 | 12,98 | DMOB | 35 | 25,65 | BAPOB | 25 | 21,93 |
| V2 | TPC | 100 | 60,91 | PPD | 45 | 14,60 | 3-DMB | 20 | 12,74 | DAPM | 35 | 20,82 |
| 10 | TPC | 100 | 60,91 | PPD | 60 | 19,47 | 3-DMB | 25 | 15,92 | BAPOB | 15 | 13,16 |
| V3 | TPC | 100 | 60,91 | PPD | 80 | 25,95 | 3-DMB | 10 | 6,37 | BAPOB | 10 | 8,77 |
| 11 | TPC | 100 | 20,30 | PPD | 37,5 | 4,06 | TMB | 50 | 12,02 | BAPOB | 12,5 | 3,66 |
| 12 | TPC | 100 | 81,21 | PPD | 40 | 17,30 | 3-DMB | 30 | 25,47 | BAPOB | 30 | 35,08 |
| 13 | TPC | 100 | 60,91 | Cl-PPD | 33,3 | 17,70 | 3-DMB | 33,3 | 21,23 | BAPOB | 33,3 | 29,23 |
| 14 | TPC | 100 | 60,91 | PPD | 25 | 8,11 | 3-DMB | 37,5 | 23,88 | BAPOB | 37,5 | 32,89 |
| 15 | TPC | 100 | 81,21 | PPD | 25 | 10,82 | 2-DMB | 37,5 | 31,84 | BAPOB | 37,5 | 43,85 |
| 16 | TPC | 100 | 81,21 | PPD | 10 | 4,33 | 3-DMB | 45 | 38,21 | BAPOB | 45 | 52,62 |
| 17 | TPC | 100 | 60,91 | PPD | 45 | 14,60 | 3-DMB | 10 | 6,37 | BAPOB | 45 | 39,47 |
| 18 | TPC | 100 | 81,21 | PPD | 25 | 10,81 | 3-DMB | 25 | 21,23 | BAPOB | 50 | 58,47 |
| V4 | TPC | 100 | 60,91 | PPD | 10 | 3,24 | 3-DMB | 10 | 25.47 | BAPOB | 80 | 43,85 |

TABELLE 2

| Beispiel | Konzentration | | | Charakterisierung | | Folieneigenschaften | | |
|---|---|---|---|---|---|---|---|---|
| Nr. | % Polymer | % $CaCl_2$ | % LiCl | $[\eta]/(cm^3/g)$ | $\eta$ /Pa.s | Reißfest./MPa | Reißdehnung/% | Anfangsmodul/GPa |
| 6 | 2,4 | 0,7 | 1,2 | 635 | 203 | 285 | 43 | 6,2 |
| 7 | 3,5 | 1,3 | - | 875 | 227 | 390 | 90 | 5,9 |
| 8 | 5,0 | 1,7 | - | 675 | 460 | 255 | 65 | 5,6 |
| 9 | 4,0 | 1,4 | - | 775 | 158 | 122 | 20 | 4,4 |
| V2 | 4,0 | 1,6 | - | 500 | 56 | 131 | 22 | 4,1 |
| 10 | 2,7 | 1,1 | 0,3 | 445 | 136 | 188 | 25 | 5,6 |
| V3 | 3,0 | 1,3 | 1,1 | 175 | 71 | 72 | 24 | 2,1 |
| 11 | 4,0 | 1,4 | - | 395 | 65 | 146 | 10 | 6,0 |
| 12 | 5,0 | 1,8 | - | 435 | 65 | 157 | 30 | 4,7 |
| 13 | 4,0 | 1,3 | - | 455 | 10 | 220 | 55 | 4,4 |
| 14 | 5,5 | 1,9 | - | 615 | 332 | 215 | 86 | 3,9 |
| 15 | 5,5 | 1,9 | - | 440 | 145 | 225 | 73 | 4,5 |
| 16 | 6,0 | 1,9 | - | 425 | 144 | 210 | 82 | 3,8 |
| 17 | 5,0 | 1,8 | - | 460 | 113 | 177 | 109 | 3,0 |
| 18 | 6,0 | 2,0 | - | 375 | 58 | 124 | 40 | 3,4 |
| V4 | 5,5 | 1,7 | - | 320 | 14 | 78 | 31 | 2,2 |

Die Lösungen enthielten 4.1 % Copolyamid und 1,5 % $CaCl_2$.

Die Lösungen wurden filtriert, entgast und wie in Beispiel 1 zu Folien verarbeitet, allerdings abweichend von Beispiel 1 in einem Wasser/NMP-Gemisch (65:35) bei 60 °C koaguliert.

Die entsprechenden Daten wie Staudingerindex [$\eta$], Viskosität $\eta$ bei 90 °C und die mechanischen Eigenschaften der Folien sind in der Tabelle 3 wiedergegeben.

21) Folien aus einer Mischung der Copolyamide aus Beispiel 19 (60 %) und Beispiel 20 (40 %).

Die entsprechenden Daten wie in den Beispielen 19 und 20 sind ebenfalls in Tabelle 3 zusammengefaßt.

Tabelle 3

| Beispiel Nr. | 19 | 20 | 21 |
|---|---|---|---|
| Charakterisierung | | | |
| [$\eta$] /($cm^3$/g) | 805 | 490 | 620 |
| $\eta$ /Pa.s | 250 | 15 | 95 |
| Folieneigenschaften | | | |
| Reißfestigkeit / MPa | 179 | 188 | 190 |
| Reißdehnung / % | 43 | 41 | 33 |
| Anfangsmodul / GPa | 4,8 | 5,1 | 5,5 |

22) Folien aus einem aromatischen Copolyamid, entsprechend Beispiel 1, naßverstreckt.

Die filtrierte und entgaste Lösung wurde zu Folien gegossen und entsprechend Beispiel 1 behandelt, jedoch mit einer Naßverstreckung im gequollenem Zustand nach einer kürzeren Vortrocknungszeit von 3 Stunden bei 90 °C. Verstreckt wurde in einer Wasser/NMP-Mischung (50:50) bei 90 °C, das Verstreckverhältnis betrug 1,5 fach.

Die mechanischen Eigenschaften der Folie betrugen 800 MPa Reißfestigkeit, 13 % Reißdehnung und 16 GPa Anfangsmodul.

## Ansprüche

1. Folie aus aromatischen Copolyamiden des Dicarbonsäure-Diamin-Typs, deren formgebende Substanz 5 aus den wiederkehrenden Struktureinheiten der Formeln A, B, C, und D

A $-CO-Ar-CO-$

B $-NH-Ar'-NH-$

C 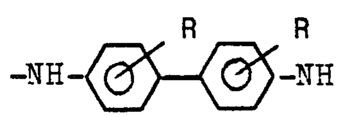

D 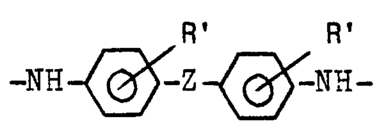

besteht, wobei

- -Ar- und-Ar'- jeweils einen zweiwertigen aromatischen Rest, bei dem die Bindungen in p- oder vergleichbarer koaxialer oder paralleler Stellung stehen unsubstituiert oder mit einem oder zwei Alkyl- oder Alkoxyresten bis zu 4 C-Atomen oder mit mindestens einem Halogenrest substituiert sind,
- R und R′ unabhängig voneinander jeweils entweder Wasserstoff, einen bis zwei Alkyl- oder Alkoxyreste mit bis zu 4 C-Atomen im Alkylrest oder Halogenreste bedeuten und
- Z eine Gruppierung -O-Ar-O- ist, wobei, -Ar- die oben genannte Bedeutung hat,
und die Zusammensetzung der Diamine B, C, und D innerhalb des Molprozentbereiches, bezogen auf die gesamte Molmenge der Diaminkomponenten, liegt, der durch die Eckpunkte Q, R, S, T und U gebildet wird, wobei

| | | | |
|---|---|---|---|
| Punkt Q: | 5 mol-% B | 90 mol-% C | 5 mol-% D |
| Punkt R: | 70 mol-% B | 25 mol-% C | 5 mol-% D |
| Punkt S: | 70 mol-% B | 5 mol-% C | 25 mol-% D |
| Punkt T: | 40 mol-% B | 5 mol-% C | 55 mol-% D |
| Punkt U: | 5 mol-% B | 35 mol-% C | 60 mol-% D |

bedeutet, dadurch gekennzeichnet, daß die Folie unverstreckt oder verstreckt ist und folgende spezifische Kriterien a) bis e) erfüllt:

a) der Staudingerindex [$\eta$] liegt im Bereich 50 bis 1200 $cm^3/g$, gemessen in 96 %iger $H_2SO_4$ bei 25 °C;

b) die Reißfestigkeit ist mindestens 100 MPa und der Modul mindestens 3 GPa;

c) der Volumenwiderstand ist mindestens $10^{15}$ $\Omega \bullet cm$ und die elektrische Durchschlagfestigkeit bei 23 °C und 50 Hz mindestens 150 kV/mm;

d) die Dimensionsstabilität weist eine Längenänderung von höchstens 2 % auf und

e) die Wasseraufnahme der Folie beträgt bei 23 °C und 50 % rel. Luftfeuchte höchstens 3 Gew.-%.

2. Folie nach Anspruch 1, dadurch gekennzeichnet, daß sie verstreckt ist.

3. Folie nach Anspruch 1 oder 2, dadurch gekennzeichnet, daß sie uniaxial verstreckt ist und Reißfestigkeiten gemäß des Gleichungen

$T_u = (K_1 \bullet VV) + T_A$   (1) und
$T_o = (K_2 \bullet VV) + T_A$   (2) aufweist,

wobei die Konstanten $K_1$ und $k_2$ Werte von 250 bzw. 850 annehmen und $T_A$ die Ausgangsreißfestigkeit, $T_u$ die Untergrenze und $T_o$ die Obergrenze der erreichbaren Reißfestigkeitswerte sowie VV das Verstreckungsverhältnis in Vielfachem der Ausgangslänge darstellen sowie Modulwerte gemäß den Gleichungen

$M_u = (K_3 \bullet VV) + M_A$   (3) und
$M_o = (K_4 \bullet VV) + M_A$   (4) aufweist,

wobei die Konstanten $K_3$ und $K_4$ Werte von 3 bzw. 15 annehmen und $M_A$ den Ausgangsmodul, $M_u$ die Untergrenze und $M_o$ die Obergrenze der durch Verstreckung erreichbaren Moduli darstellen und VV die obige Definition aufweist.

4. Folie nach Anspruch 3, dadurch gekennzeichnet, daß die Wertepaare von Reißfestigkeit und Reißdehnung innerhalb eines Bereiches liegen, gegeben durch die Gleichungen

$T_{min} = 1288 - (52{,}77 \bullet E) + (0{,}4189 \bullet E^2)$   (5) und
$T_{max} = 2898 - (126{,}8 \bullet E) + (1{,}018 \bullet E^2)$   (6)

wobei (5) sich auf die Untergrenze und (6) sich auf die Obergrenze bezieht und (5) und (6) der Forderung unterliegen, daß $5 < E < 20$ ist.

5. Folie nach Anspruch 3, dadurch gekennzeichnet, daß $K_1$ in Gleichung (1) die Zahl 250 und $K_3$ in Gleichung (3) die Zahl 4 ist.

6. Folie nach einem oder mehreren der Ansprüche 1 bis 5, dadurch gekennzeichnet, daß der Staudingerindex im Bereich 200 bis 900 $cm^3/g$ liegt, gemessen in 96 %iger $H_2SO_4$ bei 25 °C.

7. Folie nach Anspruch 1 oder 6, dadurch gekennzeichnet, daß im unverstreckten und isotropen Zustand die Reißfestigkeit mindestens 200 MPa und der Modul mindestens 3,8 GPa beträgt.

8. Folie nach einem oder mehreren der Ansprüche 1 bis 7, dadurch gekennzeichnet, daß die elektrische Durchschlagfestigkeit mindestens 200, insbesondere mindestens 220 kV/mm bei 23 °C und 50 Hz beträgt.

9. Folie nach einem oder mehreren der Ansprüche 1 bis 8, dadurch gekennzeichnet, daß die Längenänderung einer ungetemperten Folie bis 200 °C Werte von höchstens 1, vorzugsweise höchstens 0,8 % aufweisen und diejenige einer getemperten Folie bis 400 °C Werte von höchstens 1,3 % zeigen.

10. Folie nach einem oder mehreren der Ansprüche 1 bis 9, dadurch gekennzeichnet, daß die Reste -Ar- und -Ar′-unsubstituiert oder mit einem oder zwei Alkyl- oder Alkoxyresten mit bis zu 4 C-Atomen im Alkylrest oder Halogenresten substituiert sind und Halogen vorzugsweise Chlor ist.

11. Verfahren zur Herstellung einer Folie gemäß den Ansprüchen 1 bis 10 durch Kondensation von aromatischen Copolyamiden in aprotischen, polaren organischen Lösungsmitteln vom Amidtyp, gegebenenfalls unter Zusatz von Metallhalogeniden der ersten und/oder zweiten Gruppe des Periodensystems als Lösungsvermittler, Neutralisation der gebildeten Salzsäure durch Zusatz basisch wirkender Stoffe und anschließendes Verformen der erhaltenen gefilterten und entgasten Polymerlösungen zu einer Folie, dadurch gekennzeichnet, daß die Folie als solche getrocknet wird oder einem nachfolgenden Temperschritt bei 200 bis 500 °C unterworfen wird.

12. Verfahren zur Herstellung einer Folie nach Anspruch 11, dadurch gekennzeichnet, daß die Folie einer Kontaktverstreckung bei Temperaturen von 200 bis 500 °C, einem Naßstreckverfahren oder einer Kombination beider Verfahren unterworfen wird, bis die uniaxial verstreckte Folie Reißfestigkeiten gemäß den Gleichungen

$T_u = (K_1 \bullet VV) + T_A$ (1) und
$T_o = (K_2 \bullet VV) + T_A$ (2) erreicht,

wobei die Konstanten $K_1$ und $K_2$ Werte von 250 bzw. 850 annehmen und $T_A$ die Ausgangsreißfestigkeit, $T_u$ die Untergrenze und $T_o$ die Obergrenze der erreichbaren Reißfestigkeitswerte sowie VV das Verstreckungsverhältnis in Vielfachem der Ausgangslänge darstellen und T in MPa angegeben ist sowie Modulwerte gemäß den Gleichungen

$M_u = (K_3 \bullet VV) + M_A$ (3) und
$M_o = (K_4 \bullet VV) + M_A$ (4) erreicht,

wobei die Konstanten $K_3$ und $K_4$ Werte von 3 bzw. 15 annehmen und $M_A$ den Ausgangsmodul, $M_u$ die Untergrenze und $M_o$ die Obergrenze der durch Verstreckung erreichbaren Moduli darstellen, M in GPa angegeben ist und VV die obige Definition aufweist.

13. Verfahren zur Herstellung einer Folie nach Anspruch 12, dadurch gekennzeichnet, daß die Wertepaare von Reißfestigkeit und Reißdehnung innerhalb eines Bereichs liegen, gegeben durch die Gleichungen

$T_{min} = 1288 - (52{,}77 \bullet E) + (0{,}4189 \bullet E^2)$ (5) und
$T_{max} = 2898 - (126{,}8 \bullet E) + (1{,}018 \bullet E^2)$ (6)

mit T in MPa und E in %, wobei (5) sich auf die Untergrenze und (6) sich auf die Obergrenze bezieht und (5) und (6) der Forderung unterliegen, daß $5 < E < 20$ ist.

14. Verfahren nach Anspruch 12 oder 13, dadurch gekennzeichnet, daß $K_1$ in Gleichung (1) die Zahl 350 und $K_3$ in Gleichung (3) die Zahl 4 ist.

15. Verwendung der Folie gemäß den Ansprüchen 1 bis 10 zur Herstellung von hitzebeständigem Isolationsmaterial oder als Substrat für flexible Leiterplatten.

16. Verwendung nach Anspruch 15 als Substrat für flexible Leiterplatten im Bereich der Datenverarbeitung.

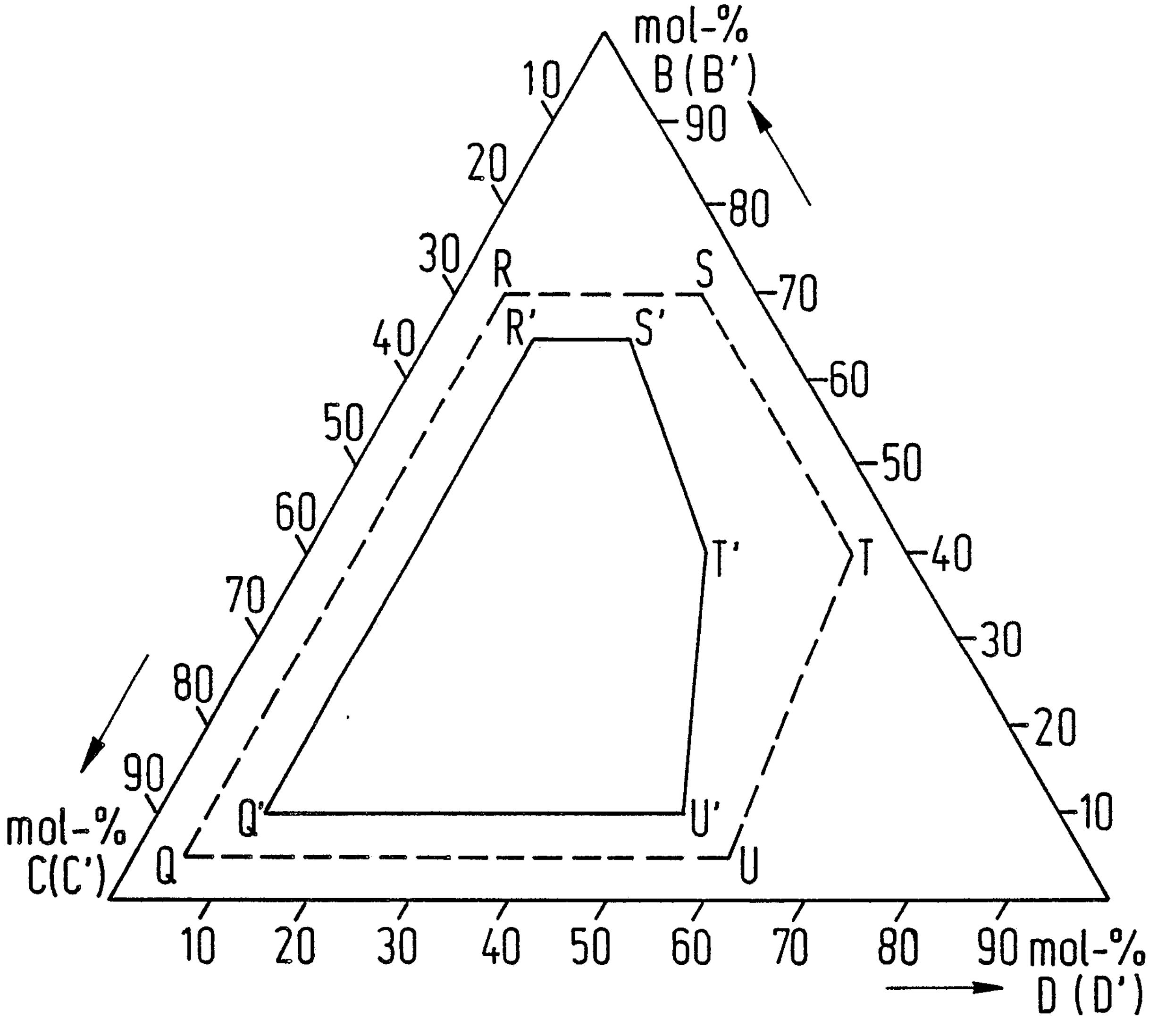
mol-%
B (B')
C(C')
D (D')
Q
R
S
T
U
Q'
R'
S'
T'
U'
10
20
30
40
50
60
70
80
90